# EUROPEAN PATENT SPECIFICATION

(11) **EP 1 846 216 B1**
(45) Date of publication and mention of the grant of the patent: **28.04.2010**
(21) Application number: 06701349.0
(22) Date of filing: 27.01.2006
(51) Int. Cl.: B29C 45/44, F04D 29/28, B29L 31/08

(54) **METHOD AND APPARATUS FOR FORMING CENTRIFUGAL FAN IMPELLERS**
VERFAHREN UND VORRICHTUNG ZUM FORMEN VON LAUFRÄDERN FÜR ZENTRIFUGALLÜFTER
PROCEDE ET APPAREIL POUR FORMER DES TURBINES DE VENTILATEUR CENTRIFUGES

(30) Priority: 31.01.2005 IT BO20050049
(43) Date of publication of application: 24.10.2007
(73) Proprietor: SPAL Automotive S.r.l., 42015 Correggio (Reggio Emilia) (IT)
(72) Inventor: SPAGGIARI, Alessandro, I-42015 Correggio (IT)
(74) Representative: Lanzoni, Luciano
(86) International application number: PCT/IB2006/000141
(87) International publication number: WO 2006/079907

(56) References cited:
- EP-A- 0 816 687
- WO-A-2004/015275
- JP-A- 6 262 644
- US-A- 5 114 657

## Description

### Technical Field

This invention relates to a method for manufacturing centrifugal fan impellers.

In particular, this invention relates to a method for forming impellers whose blades are inclined relative to its axis of rotation.

The impellers made with the method according to the invention can be used in fans suitable for several different applications, for example, for moving air through a heat exchanger in a motor vehicle heating system. The invention can also be applied to the manufacturing of impellers for fans for home air conditioning or heating installations.

### Background Art

Fan impellers with inclined blades are described in document EP 0 816 687 and also in document WO 2004/015275, the latter being in the name of the same Applicant as the present application.

Impellers of this kind are used to an increasing extent because they can meet many different requirements, including: low noise; good noise spectrum distribution; high efficiency; dimensional compactness; good pressure head and capacity.

Document EP-0 816 687 discloses a centrifugal fan having an impeller with inclined blades and a method for manufacturing the impeller.

The method described is slow because it involves making individual modules and then putting the modules together.

These characteristics of the production process constitute a serious drawback in the series production of the impellers.

Another kinds of impellers and apparatus for forming the same are described in document JP-A-06262644 and in document US-A-5114657.

### Disclosure of the Invention

The aim of this invention is to overcome this drawback by providing a method for forming centrifugal fan impellers that is effective and practical and easy to implement. The invention is defined by a method in accordance with claim 1 and by an apparatus in accordance with claim 8.

### Brief Description of the Drawings

The advantages of the invention will become more apparent from the following detailed description provided by way of example with reference to the accompanying drawings which illustrate a preferred, non-restricting embodiment of the invention and in which:
Figure 1 is a side perspective view of a centrifugal fan impeller made with the method according to this invention;
Figures 2 to 6 are schematic perspective views of the apparatus according to the invention in a succession of different operating steps;
Figures 7 and 8 are perspective views showing two details of the apparatus illustrated in the figures listed above;
Figure 9 is a perspective view from above of a part that has been removed from the apparatus illustrated in the figures listed above;
Figure 10 is a perspective view from above of a part that has been removed from the apparatus illustrated in the figures listed above.

### Detailed Description of the Preferred Embodiments of the Invention

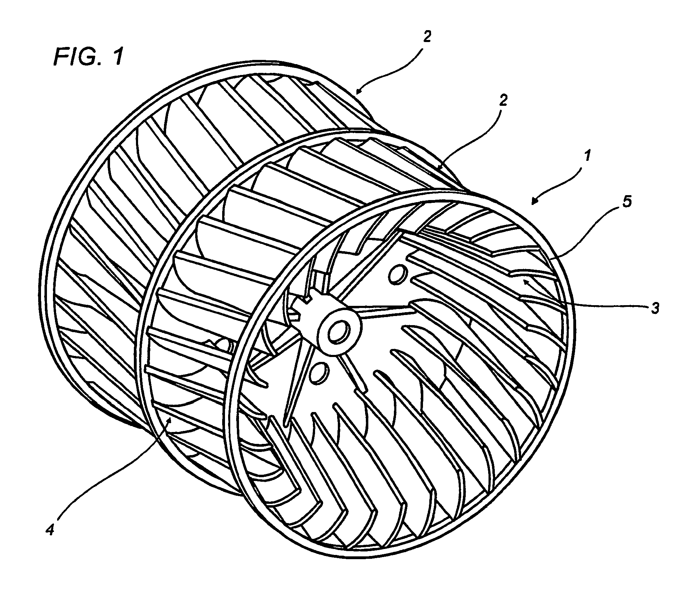

With reference to Figure 1, the numeral 1 denotes a centrifugal fan impeller of the type that can be made with the method and apparatus according to this invention.

In particular, the impeller 1 comprises a rotation axis A and two modules 2 placed side by side lengthways along the axis A. Each module 2 comprises a plurality of blades 3 extending between a mounting disc 4 and a connecting ring 5.

The blades 3 are connected to the disc 4 and to the ring 5 at an angle α relative to the axis A of the impeller 1.

The angle α may advantageously be any angle between 5 and 30 (sexagesimal) degrees and is preferably 10 degrees.

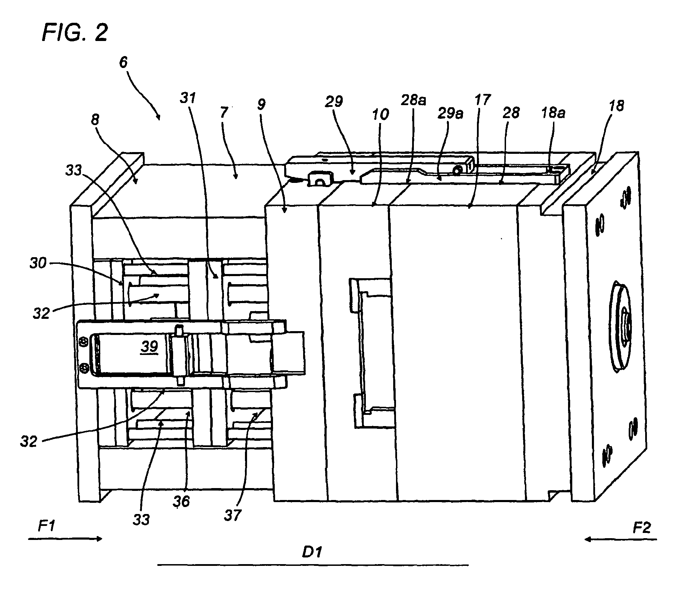

In Figures 2 to 6, the reference numeral 6 denotes an apparatus for forming impellers 1.

The apparatus 6 extends lengthways along a first straight line D1 parallel with the impeller axis A during the formation of the impeller 1 itself in the apparatus 6.

The apparatus 6 comprises a main body 7 having, at its opposite longitudinal ends, a first bed 8 and a first platform 9.

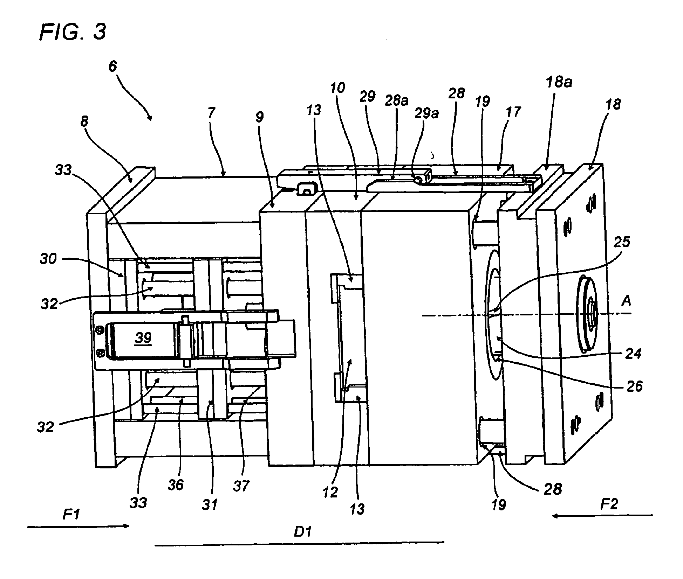

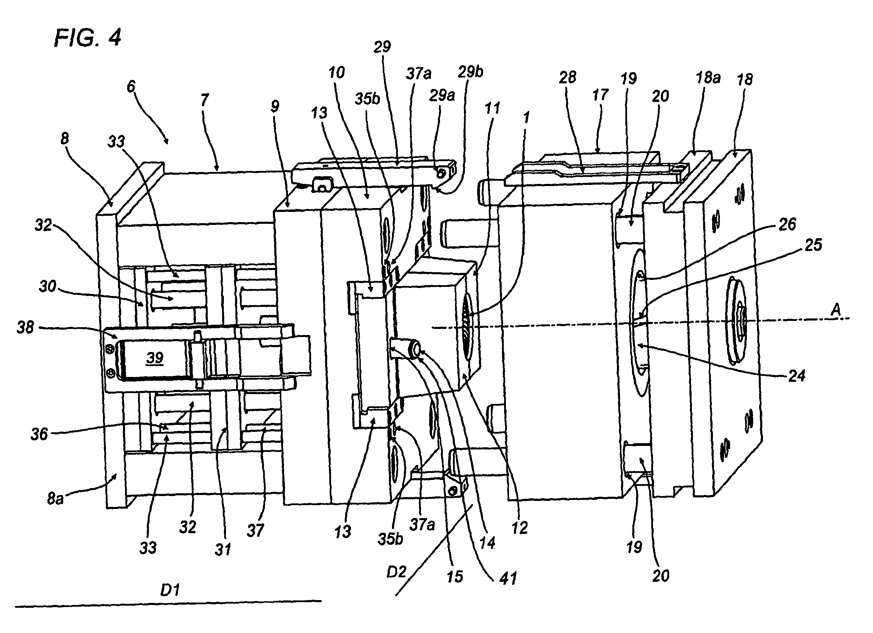

As clearly illustrated in Figures 3 and 4, the apparatus 6 comprises a table 10, mounted beside the first platform 9, for mounting two half-moulds 11, 12.

The half-moulds 11, 12 are slidably engaged with respective guides 13 made on the table 10 so that they can slide on the table 10 along a line D2 at right angles to the first line D1.

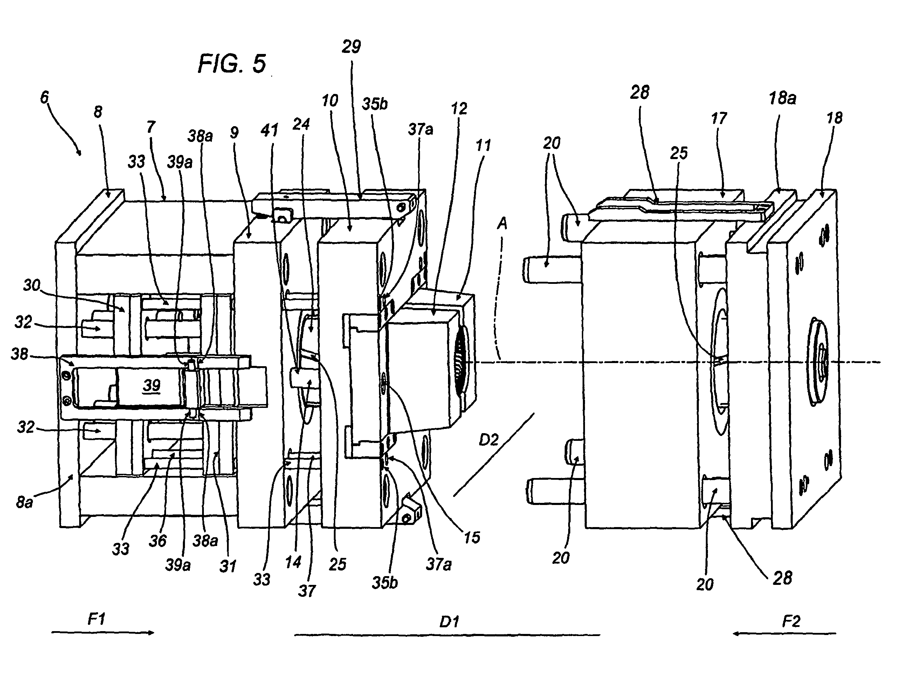

The half-moulds 11, 12 are mobile relative to each other along the line D2 between a first position, shown in Figure 4, in which they are close together, and a second position, shown in Figure 5, in which they are spaced from each other.

As illustrated in Figures 4 and 5, there are two pins 14, only one of which is shown, extend from the platform 9 at an angle to the axis A and divergent from each other.

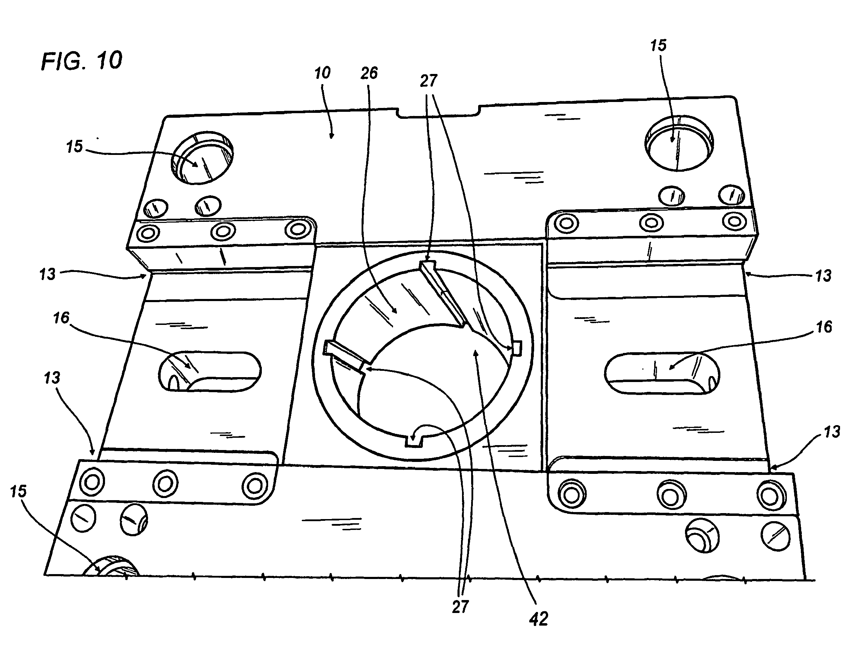

Each of the pins 14 passes through a respective slot 16 made in the table 10, shown in Figure 10, and is inserted into a hole 15 made in each of the half-moulds 11, 12.

Beside the table 10 on the line D1 in the direction of the arrow F1, the apparatus 6 comprises a second platform 17 and a second bed 18, positioned one after the other.

As clearly illustrated in Figure 3, the second platform 17 is slidably engaged with the second bed 18. More specifically, the second platform 17 has four longitudinal through holes 19 (of which only two are shown in the drawings) into which respective pins 20 that are integral with, and extend from, the second bed 18 are inserted.

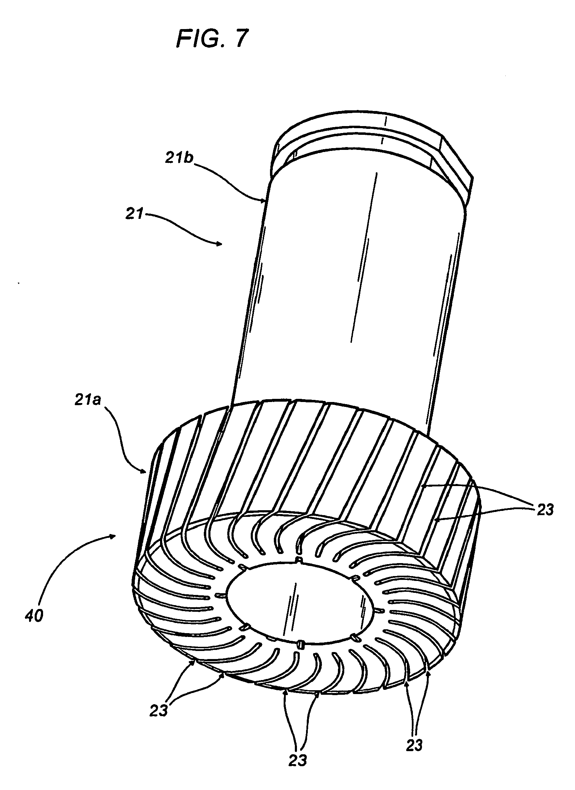

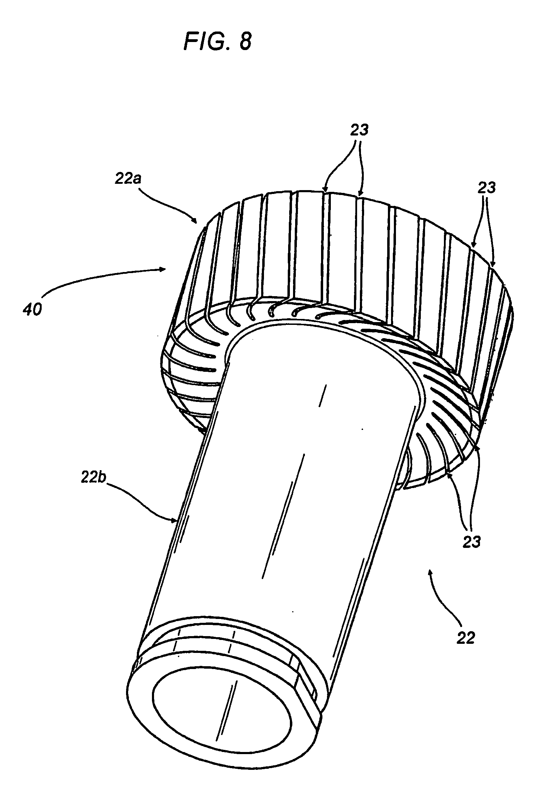

As illustrated in Figures 7 and 8, the apparatus 6 comprises two elements 21, 22 for forming the blades 3 of the impeller 1.

Each forming element 21, 22 comprises a cylindrical head 21a, 22a and a portion 21b, 22b, also cylindrical in shape, that supports the head 21a, 22a.

Each cylindrical head 21a, 22a has a plurality of grooves 23 made all the way around it on its lateral surface.

The grooves 23, advantageously made by electron discharge machining, are designed to form the impeller 1 blades 3 by having the forming material in the fluid state injected into them.

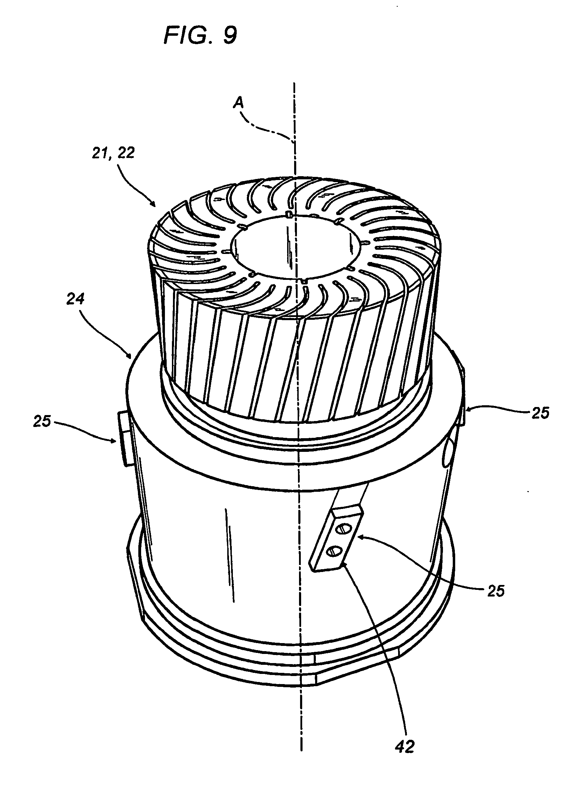

As shown in Figure 9, each forming element 21, 22 is securely housed with its cylindrical portion 21b, 22b inside a cylindrical member 24 having a plurality of protrusions 25 around its outer lateral surface.

Advantageously, the protrusions 25 extend in helical fashion around the axis A.

The table 10 and the second platform 17 have respective cylindrical compartments 26 made in them - only the one in the table 10 being shown in Figure 10 - with four helical cavities 27 made in their inside surfaces.

Each cylindrical compartment 26 is designed to accommodate a cylindrical member 24, with the protrusions 25 sliding into the cavities 27.

With reference to Figure 2, the second bed 18 has an upper face 18a with a first guide profile 28 fixed to it and extending from the second bed 18 itself along the line D1 in the direction indicated by the arrow F2 and across both the second platform 17 and the table 10.

The first guide profile 28 comprises a double protuberance 28a.

The first platform 9 has pivoted to it a slide 29 that extends lengthways along the line D1 in the direction indicated by the arrow F1 and is equipped with pins 29a that slidably engage the first guide profile 28.

As illustrated in Figure 4, the slide 29 comprises a hooked end 29b adapted to engage a portion (not illustrated in detail) of the second platform 17 in such manner as to join the latter to the first platform 9 and to the table 10 positioned between them.

The second bed 18 has a first profile 28 also on its lower face, which is partially visible in figures 3, 4, 5 and 6. This profile 28 is engaged by a respective slide 29, partially visible in figures 4, 5 and 6.

The main body 7 of the apparatus 6 further comprises a first plate 30 and a second plate 31 which are slidably engaged with a plurality of rods 32 connecting the first bed 8 to the first platform 9.

Four rods 33 and an extractor 34 are rigidly connected to the first plate 30 and move as one with the latter along the line D1.

The rods 33 go through respective through holes 35a, 35b made in the first platform 9 and in the table 10, respectively.

A plurality of unidirectional tie rods 36 connect the first plate 30 to the second plate 31.

A plurality of rods 37 connect the second plate 31 to the table 10 while keeping the distance between them fixed.

Looking in more detail, the tie rods 36 do not prevent the two plates 30, 31 from moving towards each other and enable the first plate 30 to move the second plate 31.

The rods 37 enable the second plate 31 to push the table 10 in the direction indicated by the arrow F1 and to pull it in the direction indicated by the arrow F2.

As shown in Figure 4, the rods 37 are inserted into respective holes 37a to which they are fixed with respective screw fasteners not illustrated.

As illustrated in Figure 5, the first bed 8 has a front face 8a with a second guide profile 38 fixed to it and extending from the first bed 8 itself along the line D1 in the direction indicated by the arrow F1 and across the first platform 9.

The second guide profile 38 comprises a double protuberance 38a.

The first plate 30 has pivoted to it a sheet 39 that extends lengthways along the line D1 in the direction indicated by the arrow F1 and is equipped with pins 39a that slidably engage the second guide profile 38.

As illustrated in Figure 4, the sheet 39 comprises an engagement end 39b adapted to engage the second plate 31 in such a way as to push it, along with the first plate 30, in the direction indicated by the arrow F1.

In use, with reference to Figure 2, the forming apparatus 6 is in a closed configuration where the first platform 9, the table 10, the second platform 17 and the second bed 18 are close together and a plastic substance can be injected according to substantially known methods.

The plastic substance in a fluid state is injected into a forming volume defined by the two forming elements 21, 22 and by the two half-moulds 11, 12.

The two half-moulds 11, 12 together define a mould 40.

The injection step is followed by a cooling step in which the apparatus 6 is kept in the configuration illustrated in Figure 2.

After cooling, the impeller 1 is substantially formed in the two half-moulds 11, 12.

Starting from the configuration illustrated in Figure 2, where, as already mentioned, the apparatus 6 is closed, that is to say, its component parts are close together, the second bed 18 is separated from the rest of the apparatus 6, the second bed 18 remaining in a fixed position while the other parts of the apparatus 6 are advanced as one in the direction indicated by the arrow F2.

In particular, the second bed 18 is separated from the second platform 17.

As stated above, the forming element 22, shown in Figure 8, comprises a head 22a, having grooves 23 made in it to form the blades 3 of the impeller 1, and a cylindrical portion 22b securely housed in the member 24.

The member 24 is inserted into the aforementioned compartment 26, made on the second platform 17 and on whose inside surface the aforementioned respective cavities 27, are made.

The cavities 27 are oriented in the direction of a winding helix and accommodate the protrusions 25 present on the outside surface of the cylindrical member 24.

The member 24, and hence also the forming element 22 integral with it, is free to rotate about the axis A relative to the second bed 18.

With reference to Figure 3, as the second bed 18 and the second platform 17 are moved apart, the forming element 22, thanks to the winding motion of the protrusions 25 in the helical cavities 27 made in the compartment 26, is unscrewed from the plastic blades 3 formed by injection of the plastic material into the half-moulds 11, 12 and constituting a first module 2 of the impeller 1.

The step of extracting the first of the forming elements 21, 22 is thus performed in the manner just described.

As described above, the forming element 22 is extracted from the mould 40 and from the formed impeller 1 by a roto-translational movement about and along the axis A of the impeller 1 itself.

More specifically, with reference to the forming element 22, this roto-translational movement consists of a rotational movement about the axis A and a translational movement along the line D1 in the direction indicated by the arrow F1.

With reference to Figures 3 and 4, when the slide 29, pivoted to the first platform 9, engages the protuberance 28a of the guide profile 28, the hooked end 29b of the respective portion, not illustrated, of the second platform 17 is released and the second platform 17 comes away from the table 10 that mounts the half-moulds 11, 12.

The second platform 17 remains attached to the second bed 18 whilst the rest of the apparatus 6 continues advancing in the direction of the arrow F2.

Thus, the assembly consisting of the second platform 17 and the second bed 18 is separated from the rest of the forming apparatus 6.

As illustrated in Figure 4, the impeller 1, with its first module 2 disengaged from the respective forming element 22, continues to remain engaged with the half-moulds 11, 12 and with the forming element 21 of the other module 2.

As illustrated in Figure 5, the first plate 30 is advanced in the direction of the arrow F1 by customary actuating means which are not illustrated.

The first plate 30 is attached to the second plate 31 by the sheet 39 and thus, as it advances, the first plate 30 pushes the second plate 31 in the direction of the arrow F1; the second plate 31, through the rods 37, is attached to the table 10 which is thus moved away from the first platform 9 which remains in a fixed position.

The two half-moulds 11, 12 are moved apart by the action of the two diverging pins 14, and the forming element 21, thanks to the winding motion of the protrusions 25 in the helical cavities 27 made in the compartment 26, is unscrewed from the plastic blades 3 formed by injection of the plastic material into the half-moulds 11, 12 and constituting a second module 2 of the impeller 1.

The diverging pins 14, together with the respective holes 15 made in the half-moulds 11, 12 and with movement means that are not illustrated, constitute respective means 41 for actuating the half-moulds 11, 12.

The protrusions 25, together with the cylindrical compartments 26 in which the cavities 27 are made and with movement that are not illustrated, constitute respective means 42 for extracting the forming elements 11, 12.

The step of extracting the second of the forming elements 21, 22 and the step of opening the mould 40 are thus performed in the manner just described.

As described above, the forming element 21 is extracted from the mould 40 and from the formed impeller 1 by a roto-translational movement about and along the axis A of the impeller 1 itself.

More specifically, with reference to the forming element 21, this roto-translational movement consists of a rotational movement about the axis A and a translational movement along the line D1 in the direction indicated by the arrow F2.

As the sheet 39 is pushed by the first plate 30 in the direction of the arrow F2, the pins 39a on it engage the protuberance 38a of the second guide profile 38, thus disengaging the plates 30 and 31.

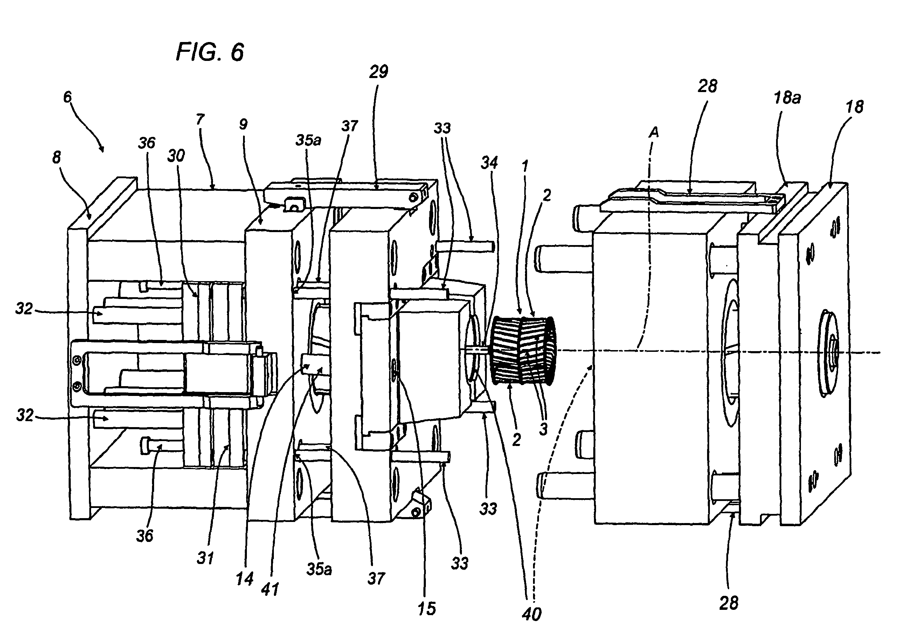

As illustrated in Figure 6, when the second plate 31 abuts against the first platform 9, the first plate 30 continues moving relative to the table 10 and relative to the first platform 9 itself, thus also advancing the extractor 34 which, with the half-moulds 11, 12 in their second, spaced position, extracts the impeller 1 from them.

The first plate 30 stops when it meets the second plate 31.

Advantageously, therefore, the forming method according to the invention can be used to form the impeller 1 integrally, without having to form the modules 2 individually and put them together at a later stage.

The term "integrally" referred to forming in this context means that the impeller 1 is formed directly as a single block.

In the embodiment of the invention illustrated herein, the impeller 1 blades 3 of one module 2 are inclined relative to the axis A in the direction opposite to that of the blades 3 of the other module 2.

In an alternative embodiment that is not illustrated but that obviously falls within the scope of the invention, the impeller 1 blades 3 of one module 2 are inclined relative to the axis A in the same direction as the blades 3 of the other module 2.

In this specification and with reference in particular to the rotation of the forming elements 21, 22, the term "same direction of rotation" means that to an observer on the axis of rotation A at any point not between the forming elements 21, 22, both these elements turn in the same direction.

The term "opposite directions of rotation", on the other hand, means that to an observer on the axis of rotation A at any point not between the forming elements 21, 22, both these elements turn in opposite directions.

The actuating means and devices used to accomplish the movements described and illustrated in this specification are of substantially known type and have therefore not been illustrated or described.

Advantageously, metal alloys may be used instead of plastic to form the impeller without thereby departing from the scope of the inventive concept.

The invention described can be modified and adapted in several ways without thereby departing from the scope of the inventive concept, as defined in the claims herein.

Moreover, all the details of the invention may be substituted by technically equivalent elements.

## Claims

1. A method for forming centrifugal fan impellers (1) having an axis of rotation (A) and comprising two modules (2) placed side by side lengthways along the axis of rotation (A), each module (2) comprising a plurality of blades (3) that are inclined relative to the axis of rotation (A), the method being **characterised in that** it comprises the steps of
- providing a first and a second element (21, 22) for forming the blades (3) and designed to be positioned side by side lengthways along the axis of rotation (A);
- providing two half-moulds (11, 12) designed to enclose the forming elements (21, 22); integrally forming the two modules ; and
- extracting the forming elements (21, 22) from the half-moulds (11, 12) by imparting to the forming elements (21, 22) a rotation about the axis of rotation (A) and a translation along a first line (D1) parallel to the axis of rotation (A).

2. The method according to claim 1, **characterised in that** the step of integrally forming the two modules (2) comprises the step of injecting a plastic substance into a mould (40) within which the first and the second element (21, 22) for forming the blades (3) are positioned side by side lengthways along the axis (A).

3. The method according to claim 2, **characterised in that** the step of integrally forming the two modules (2) comprises the step of extracting the forming elements (21, 22) from the mould (40) while the impeller (1) is maintained inside the mould (40).

4. The method according to claim 1, **characterised in that** the step of translating the forming elements (21, 22) is performed along the line (D1) in respective opposite directions.

5. The method according to claims from 1 or 4, **characterised in that** the step of roto-translating the forming elements (21, 22) is performed through a screw coupling between the forming elements (21, 22) and respective mounting elements (26, 27).

6. The method according to any of the claims from 1 to 5, **characterised in that** it comprises a step of opening the mould (40).

7. The method according to any of the claims from 1 to 6, **characterised in that** it comprises the step of extracting the formed impeller (1) from the mould (40).

8. An apparatus for forming centrifugal fan impellers (1) having an axis of rotation (A) and comprising two modules (2) placed side by side lengthways along the axis (A), each module (2) comprising a plurality of blades (3) that are inclined relative to the axis (A), the apparatus being **characterised in that** the two modules (2) are integrally formed and the apparatus further comprises:
- a first and a second element (21, 22) for forming the blades (3) and designed to be positioned side by side lengthways along the axis (A);
- two half-moulds (11, 12) designed to enclose the forming elements (21, 22); and
- means (42) for extracting the forming elements (21, 22) from the half-moulds (11, 12), said means performing the extraction operation by imparting to the forming elements (21, 22) a movement consisting of a rotation about the axis (A) and a translation along a first line (D1) parallel to the axis (A).

9. The apparatus according to claim 8, **characterised in that** the translation of the two forming elements (21, 22) is performed along the first line (D1) in opposite directions (F1, F2), respectively.

10. the apparatus according to claim 8 or 9, where the respective blades (3) of one module (2) are inclined in the same direction as the blades (3) of the other module (2), **characterised in that** the extraction means (42) are designed to rotate the two forming elements (21, 22) in respective opposite rotation directions.

11. The apparatus according to claim 8 or 9, where the respective blades (3) of one module (2) are inclined in the opposite direction to the blades (3) of the other module (2), **characterised in that** the extraction means (42) are designed to rotate the two forming elements (21, 22) in the same rotation direction.

12. The apparatus according to any of the foregoing claims from 8 to 11, **characterised in that** each of the elements (21, 22) for forming the blades (3) comprises a cylindrical head (21a, 22a) having a plurality of grooves (23) made all the way around it on its lateral surface and designed to form the blades (3).

13. The apparatus according to claim 12, **characterised in that** each of the forming elements (21, 22) is housed in a respective cylindrical member (24) having at least two protrusions (25) on its outer lateral surface.

14. The apparatus according to claim 13, **characterised in that** the extraction means (42) comprise, for each forming element (21, 22) a cylindrical compartment (26) on whose inside surface there are made at least two cavities (27) for accommodating the protrusions (25).

15. The apparatus according to claim 14, **characterised in that** the cavity (27) is helical in shape.

16. The apparatus according to claim 15, **characterised in that** each of the protrusions (25) engages a cavity (27) by a relative twisting movement.

17. The apparatus according to any of the foregoing claims from 8 to 16, where the half-moulds (11, 12) are mounted on a table (10), **characterised in that** it comprises guide means (13) to enable the half-moulds (11, 12) to move relative to each other on the table (10) along a second line (D2) perpendicular to the axis (A), between a first position in which they are close together and a second position in which they are apart.

18. The apparatus according to claim 17, **characterised in that** it comprises means (41) for actuating the half-moulds (11, 12), said means (41) comprising a pair of pins (14) that are inclined relative to the axis (A) and divergent from each other, each of the pins (14) engaging a respective hole (15) made in each of the half-moulds (11, 12).

19. The apparatus according to any of the foregoing claims from 8 to 18, **characterised in that** it comprises an extractor element (34) for extracting the impeller (1) from the half-moulds (11, 12).

## Patentansprüche

1. Verfahren zum Formen von Zentrifugallüfter-Laufrädern (1), die eine Drehachse (A) aufweisen und zwei Module (2) beinhalten, die nebeneinander in Längsrichtung entlang der Drehachse (A) angeordnet sind, wobei jedes Modul (2) mehrere Schaufeln (3) beinhaltet, die relativ zur Drehachse (A) schräg geneigt sind, wobei das Verfahren **dadurch gekennzeichnet ist, dass** es folgende Schritte beinhaltet:
- Bereitstellen eines ersten und eines zweiten Elementes (21, 22) zum Formen der Schaufeln (3), die dafür ausgelegt sind, nebeneinander in Längsrichtung entlang der Drehachse (A) angeordnet zu werden;
- Bereitstellen von zwei Formhälften (11, 12), die dafür ausgelegt sind, die Formelemente (21, 22) zu umschließen, um die zwei Module einteilig zu formen; und
- Entformen der Formelemente (21, 22) aus den Formhälften (11, 12), indem die Formelemente (21, 22) in eine Rotationsbewegung um die Drehachse (A) und eine Translationsbewegung entlang einer ersten Linie (D1), die parallel zu der Drehachse (A) verläuft, versetzt werden.

2. Verfahren nach Anspruch 1, **dadurch gekennzeichnet, dass** der Schritt des einteiligen Formens der zwei Module (2) den Schritt des Einspritzens eines Kunststoffmaterials in eine Spritzgussform (40) beinhaltet, worin das erste und das zweite Element (21, 22) zum Formen der Schaufeln (3) nebeneinander in Längsrichtung entlang der Achse (A) angeordnet sind.

3. Verfahren nach Anspruch 2, **dadurch gekennzeichnet, dass** der Schritt des einteiligen Formens der zwei Module (2) den Schritt des Entformens der Formelemente (21, 22) aus der Spritzgussform (40) beinhaltet, während das Laufrad (1) in der Spritzgussform (40) gehalten wird.

4. Verfahren nach Anspruch 1, **dadurch gekennzeichnet, dass** der Schritt der Translationsbewegung der Formelemente (21, 22) entlang der Linie (D1) in entgegengesetzten Richtungen erfolgt.

5. Verfahren nach den Ansprüchen 1 oder 4, **dadurch gekennzeichnet, dass** der Schritt der Rotations- und Translationsbewegung der Formelemente (21, 22) durch eine Schraubkupplung zwischen den Formelementen (21, 22) und entsprechenden Montageelementen (26, 27) ausgeführt wird.

6. Verfahren nach einem der Ansprüche von 1 bis 5, **dadurch gekennzeichnet, dass** es einen Schritt des Öffnens der Spritzgussform (40) beinhaltet.

7. Verfahren nach einem der Ansprüche von 1 bis 6, **dadurch gekennzeichnet, dass** es einen Schritt des Entformens des geformten Laufrades (1) aus der Spritzgussform (40) beinhaltet.

8. Vorrichtung zum Formen von Zentrifugallüfter-Laufrädern (1), die eine Drehachse (A) aufweisen und zwei Module (2) beinhalten, die nebeneinander in Längsrichtung entlang der Achse (A) angeordnet sind, wobei jedes Modul (2) mehrere Schaufeln (3) beinhaltet, die relativ zur Achse (A) schräg geneigt sind, wobei die Vorrichtung **dadurch gekennzeichnet ist, dass** die zwei Module (2) einteilig geformt werden und die Vorrichtung ferner beinhaltet:
- ein erstes und ein zweites Element (21, 22) zum Formen der Schaufeln (3), die dafür ausgelegt sind, nebeneinander in Längsrichtung entlang der Drehachse (A) angeordnet zu werden;
- zwei Formhälften (11, 12), die dafür ausgelegt sind, die Formelemente (21, 22) zu umschließen; und
- Mittel (42) zum Entformen der Formelemente (21, 22) aus den Formhälften (11, 12), wobei diese Mittel zur Ausführung des Entformugsvorgangs die Formelemente (21, 22) in eine Bewegung versetzen, die sich aus einer Rotation um die Achse (A) und einer Translation entlang einer ersten Linie (D1), die parallel zu der Achse (A) verläuft, zusammensetzt.

9. Vorrichtung nach Anspruch 8, **dadurch gekennzeichnet, dass** die Translationsbewegung der Formelemente (21, 22) entlang der ersten Linie (D1) in einander entgegengesetzten Richtungen (F1, F2) erfolgt.

10. Vorrichtung nach Anspruch 8 oder 9, worin die entsprechenden Schaufeln (3) eines Moduls (2) in der gleichen Richtung wie die Schaufeln (3) des anderen Moduls (2) schräg geneigt sind, **dadurch gekennzeichnet, dass** die Entformungsmittel (42) dafür ausgelegt sind, die zwei Formelemente (21, 22) in einander entgegengesetzten Rotationsrichtungen zu drehen.

11. Vorrichtung nach Anspruch 8 oder 9, worin die entsprechenden Schaufeln (3) eines Moduls (2) in entgegengesetzter Richtung zu den Schaufeln (3) des anderen Moduls (2) schräg geneigt sind, **dadurch gekennzeichnet, dass** die Entformungsmittel (42) dafür ausgelegt sind, die zwei Formelemente (21, 22) in jeweils gleichen Rotationsrichtungen zu drehen.

12. Vorrichtung nach einem der vorgehenden Ansprüche von 8 bis 11, **dadurch gekennzeichnet, dass** jedes der Elemente (21, 22) zum Formen der Schaufeln (3) einen zylindrischen Kopf (21a, 22a) beinhaltet, der mehrere Rillen (23) aufweist, die rund um seine Seitenoberfläche ausgefertigt sind und dafür ausgelegt sind, die Schaufeln (3) zu formen.

13. Vorrichtung nach Anspruch 12, **dadurch gekennzeichnet, dass** jedes der Formelemente (21, 22) in einem entsprechenden zylindrischen Teil (24) untergebracht ist, das zumindest zwei Vorsprünge (25) an seiner Außenoberfläche aufweist.

14. Vorrichtung nach Anspruch 13, **dadurch gekennzeichnet, dass** die Entformungsmittel (42) für jedes Formelement (21, 22) ein zylindrisches Abteil (26) beinhalten, an dessen Innenoberfläche mindestens zwei Hohlräume (27) zur Aufnahme der Vorsprünge (25) ausgefertigt sind.

15. Vorrichtung nach Anspruch 14, **dadurch gekennzeichnet, dass** der Hohlraum (27) spiralförmig ausgebildet ist.

16. Vorrichtung nach Anspruch 15, **dadurch gekennzeichnet, dass** jeder der Vorsprünge (25) mit einer entsprechenden Verdrehbewegung in einen Hohlraum (27) eingreift.

17. Vorrichtung nach einem der vorgehenden Ansprüche von 8 bis 16, worin die Formhälften (11, 12) auf einem Tisch (10) montiert sind, **dadurch gekennzeichnet, dass** sie Führungsmittel (13) beinhaltet, die es ermöglichen, die Formhälften (11, 12) relativ zueinander auf dem Tisch (10) entlang einer zweiten Linie (D2), die perpendikular zur Achse (A) ausgerichtet ist, zwischen einer ersten Stellung, in der sie einander angenähert sind, und einer zweiten Stellung, in der sie voneinander entfernt sind, zu bewegen.

18. Vorrichtung nach Anspruch 17, **dadurch gekennzeichnet, dass** sie Mittel (41) für den Antrieb der Formhälften (11, 12) beinhaltet, wobei diese Mittel (41) ein Paar Stifte (14) beinhalten, die relativ zu der Achse (A) schräg geneigt sind und voneinander divergierend sind, wobei jeder der Stifte (14) in eine entsprechende Öffnung (15) eingreift, die in jeder der Formhälften (11, 12) ausgebildet ist.

19. Vorrichtung nach einem der vorgehenden Ansprüche von 8 bis 18, **dadurch gekennzeichnet, dass** sie ein Entformungselement (34) zum Entformen des Laufrades (1) aus den Formhälften (11, 12) beinhaltet.

## Revendications

1. Un procédé pour former des turbines (1) de ventilateurs centrifuges ayant un axe de rotation (A) et comprenant deux modules (2) placés côte à côte et longitudinalement le long dudit axe de rotation (A), chaque module (2) comprenant une pluralité de pales (3) qui sont inclinées par rapport audit axe de rotation (A), le procédé étant **caractérisé en ce qu'**il comprend les phases consistant à
- prévoir un premier et un deuxième élément (21, 22) pour le formage des pales (3), destinés à être placés côte à côte et longitudinalement le long de l'axe de rotation (A) ;
- prévoir deux demi-moules (11, 12) destinés à contenir les éléments de formage (21, 22) ; former intégralement les deux modules ; et
- extraire les éléments de formage (21, 22) des demi-moules (11, 12) en imprimant auxdits éléments de formage (21, 22) une rotation autour de l'axe de rotation (A) et une translation le long d'une première direction (D1) parallèle audit axe de rotation (A).

2. Le procédé selon la revendication 1, **caractérisé en ce que** la phase de formage intégral des deux modules (2) comprend la phase consistant à injecter une substance plastique dans un moule (40) à l'intérieur duquel sont placés, côte à côte et longitudinalement le long de l'axe (A), les premier et deuxième éléments (21, 22) de formage des pales (3).

3. Le procédé selon la revendication 2, **caractérisé en ce que** la phase de formage intégral des deux modules (2) comprend la phase consistant à extraire les éléments de formage (21, 22) du moule (40) tout en maintenant la turbine (1) à l'intérieur de ce même moule (40).

4. Le procédé selon la revendication 1, **caractérisé en ce que** la phase de translation des éléments de formage (21, 22) est effectuée le long de la direction (D1) dans des sens opposés respectifs.

5. Le procédé selon la revendication 1 ou 4, **caractérisé en ce que** la phase de roto-translation des éléments de formage (21, 22) est effectuée par le biais d'un accouplement à vis entre les éléments de formage (21, 22) eux-mêmes et des éléments de support (26, 27) respectifs.

6. Le procédé selon l'une quelconque des revendications de 1 à 5, **caractérisé en ce qu'**il comprend une phase consistant à ouvrir le moule (40).

7. Le procédé selon l'une quelconque des revendications de 1 à 6, **caractérisé en ce qu'**il comprend la phase consistant à extraire la turbine (1) formée du moule (40).

8. Un appareil pour former des turbines (1) de ventilateurs centrifuges ayant un axe de rotation (A) et comprenant deux modules (2) placés côte à côte et longitudinalement le long de l'axe (A), chaque module (2) comprenant une pluralité de pales (3) qui sont inclinées par rapport audit axe (A), l'appareil étant **caractérisé en ce que** les deux modules (2) sont intégralement formés et l'appareil comprend en outre :
- un premier et un deuxième élément (21, 22) pour le formage des pales (3), destinés à être placés côte à côte et longitudinalement le long de l'axe (A) ;
- deux demi-moules (11, 12) destinés à contenir les éléments de formage (21, 22) ; et
- des moyens (42) pour l'extraction des éléments de formage (21, 22) des demi-moules (11, 12), lesdits moyens effectuant l'opération d'extraction en imprimant auxdits éléments de formage (21, 22) un mouvement composé d'une rotation autour de l'axe (A) et d'une translation le long d'une première direction (D1) parallèle à l'axe (A).

9. L'appareil selon la revendication 8, **caractérisé en ce que** la translation des deux éléments de formage (21, 22) est effectuée le long de la première direction (D1) dans des sens (F1, F2) respectivement opposés.

10. L'appareil selon la revendication 8 ou 9, où les pales (3) respectives d'un module (2) sont inclinées dans la même direction que les pales (3) de l'autre module (2), **caractérisé en ce que** les moyens d'extraction (42) sont destinés à faire tourner les deux éléments de formage (21, 22) dans des sens de rotation opposés respectifs.

11. L'appareil selon la revendication 8 ou 9, où les pales (3) respectives d'un module (2) sont inclinées dans la direction opposée par rapport aux pales (3) de l'autre module (2), **caractérisé en ce que** les moyens d'extraction (42) sont destinés à faire tourner les deux éléments de formage (21, 22) dans le même sens de rotation.

12. L'appareil selon l'une quelconque des revendications précédentes de 8 à 11, **caractérisé en ce que** chacun des éléments (21, 22) de formage des pales (3) comprend une tête cylindrique (21a, 22a) qui présente une pluralité de rainures (23) réalisées sur tout le pourtour de sa surface latérale et destinées à former les pales (3).

13. L'appareil selon la revendication 12, **caractérisé en ce que** chacun des éléments de formage (21, 22) est logé dans un organe cylindrique (24) respectif qui présente au moins deux saillies (25) sur sa surface latérale extérieure.

14. L'appareil selon la revendication 13, **caractérisé en ce que** les moyens d'extraction (42) comprennent, pour chaque élément de formage (21, 22), un compartiment cylindrique (26) sur la surface intérieure duquel sont réalisées au moins deux cavités (27) destinées à loger les saillies (25).

15. L'appareil selon la revendication 14, **caractérisé en ce que** la cavité (27) a une forme hélicoïdale.

16. L'appareil selon la revendication 15, **caractérisé en ce que** chacune des saillies (25) s'emboîte dans une cavité (27) par un mouvement relatif de torsion.

17. L'appareil selon l'une quelconque des revendications précédentes de 8 à 16, où les demi-moules (11, 12) sont montés sur une table (10), **caractérisé en ce qu'**il comprend des moyens de guidage (13) destinés à permettre un mouvement relatif des demi-moules (11, 12) sur la table (10), le long d'une deuxième direction (D2) perpendiculaire à l'axe (A), entre une première position de proximité réciproque et une deuxième position d'éloignement réciproque.

18. L'appareil selon la revendication 17, **caractérisé en ce qu'**il comprend des moyens (41) pour l'actionnement des demi-moules (11, 12), lesdits moyens (41) comprenant une paire de broches (14) qui sont inclinées par rapport à l'axe (A) et divergentes l'une par rapport à l'autre, chacune des broches (14) venant en prise dans un trou (15) respectif réalisé dans chacun des demi-moules (11, 12).

19. L'appareil selon l'une quelconque des revendications précédentes de 8 à 18, **caractérisé en ce qu'**il comprend un élément extracteur (34) pour l'extraction de la turbine (1) des demi-moules (11, 12).
